(19) **Europäisches Patentamt**
**European Patent Office**
**Office européen des brevets**

(11) **EP 1 738 935 B1**

(12) **EUROPEAN PATENT SPECIFICATION**

(45) Date of publication and mention
of the grant of the patent:
**08.06.2011 Bulletin 2011/23**

(51) Int Cl.:
***B60C 19/08*** *(2006.01)*

(21) Application number: **06012184.5**

(22) Date of filing: **13.06.2006**

(54) **Tire with rubber sidewall containing internal electrically conductive rubber strip**

Reifen mit einer Gummiseitenwand, die einen inneren leitenden Gummistreifen enthält

Bandage avec un flanc caoutchouteux ayant à son intérieur un insert caoutchouteux conducteur

(84) Designated Contracting States:
**DE FR**

(30) Priority: **29.06.2005 JP 2005189909**

(43) Date of publication of application:
**03.01.2007 Bulletin 2007/01**

(73) Proprietor: **Sumitomo Rubber Industries, Ltd.**
**Kobe-shi,**
**Hyogo-ken (JP)**

(72) Inventors:
• **Uchida, Mamoru**
**Chuo-ku,**
**Kobe-shi,**
**Hyogo-ken, (JP)**
• **Hattori, Takayuki**
**Chuo-ku,**
**Kobe-shi,**
**Hyogo-ken, (JP)**

• **Wada, Takao**
**Chuo-ku,**
**Kobe-shi,**
**Hyogo-ken, (JP)**
• **Hirayama, Tomoaki**
**Chuo-ku,**
**Kobe-shi,**
**Hyogo-ken, (JP)**

(74) Representative: **Manitz, Finsterwald & Partner**
**GbR**
**Postfach 31 02 20**
**80102 München (DE)**

(56) References cited:
EP-A- 1 533 144       EP-A- 1 621 365
DE-C- 820 543         JP-A- 11 254 924
JP-A- 2000 190 709    JP-A- 2000 225 618
JP-A- 2004 268 863

**Description**

The present invention relates to a tire and specifically relates to a tire improving electric conductivity and rolling resistance performance.

When vehicle running is carried out, static electricity generated by running etc is accumulated in tires loaded in the vehicle and, for example, there are problems such that an electric discharge phenomenon occurs when the vehicle runs on a metallic portion such as a manhole, or electricity is discharged to catch fire during oil feeding; therefore a tire excellent in electric conductivity has been desired.

In order to improve electric conductivity of a tire, JP-A-8-230407 and the specification of JP No. 3101557 disclose that a thin film having electric conductivity is prepared on the surface of a tire from the tread part to the sidewall part of the tire. However, there has been a problem that the thin film is worn by contacting with a rim flange part and, consequently, electric conductivity of the tire is lost.

Further, a reinforcing filler having electric conductivity such as carbon black is added in order to improve electric conductivity of a tire, however, there has been a problem that the addition of the reinforcing filler makes rolling resistance of a tire increased (rolling resistance performance is lowered).

In general, as a technology of lowering the rolling resistance (improving the rolling resistance performance) of a tire, using a large amount of silica as a reinforcing filler in a tire is known.

For example, the JP-A-2003-64222 discloses that silica is compounded in a tread part, breaker part, sidewall part, ply part, clinch apex and bead apex of a tire. However, the obtained tire was not a tire having sufficient electric conductivity.

Thus, a tire improving both of electric conductivity and rolling resistance performance has been not obtained so far.

JP 2000 225618 A discloses a tire according to the preamble of claim 1 and a tire according to the preamble of claim 2. Further prior art is known from JP 11 254924 A, DE 820 543 C, JP 2004 268863 A.

Attention is also drawn to document EP 1 533 144 A which discloses a tire, wherein the inherent resistance valve of a tread part and a sidewall part is at least $10^{10}\Omega$.cm and the amount of silica in a reinforcing filler in the tread part is high, the tire further having a conductive rubber layer which contacts with the bead and is continuously arranged between sidewall part and the carcass ply part and between the tread part and the breaker part and having an inherent resistance valve of at most $10^6$ $\Omega$.cm and a thickness of 0.64 mm.

An object of the present invention is to provide a tire improving electric conductivity and rolling resistance performance.

The object is satisfied by a tire in accordance with claim 1 or by a tire in accordance with claim 2. A preferred embodiment is mentioned in the dependent claim.

FIG. 1 is a partial section view of a tire having no conductive rubber layer.

FIG. 2 is a partial section view of the tire of Example 1.

FIG. 3 is a partial section view of the tire of Example 2.

FIG. 4 is a partial section view of the tires of Examples 3 to 5.

FIG. 5 is a partial section view of the tire of Comparative Example 1.

FIG. 6 is a partial section view of the tire of Comparative Example 4.

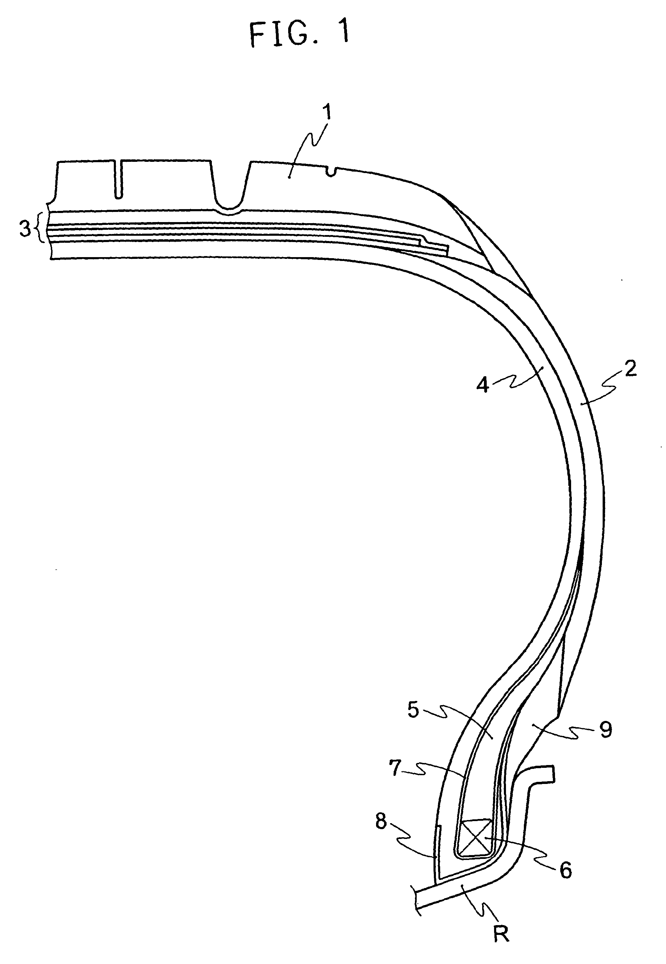

The tire of the present invention has a tread part, a sidewall part, a breaker part or a ply part having a specific inherent resistance value. Further, a tread part 1, a sidewall part 2, a breaker part 3 or a ply part 4 refer to sites shown in Fig. 1.

The inherent resistance value of the tread part, the sidewall part, the breaker part and the ply part is at least $10^9$ $\Omega$·cm, preferably at least $10^{10}$ $\Omega$·cm, more preferably at least $10^{11}$ $\Omega$·cm, and further preferably at least $10^{12}$ $\Omega$·cm. When the inherent resistance value is less than $10^9$ $\Omega$·cm, for example, carbon black is required to be added in order to lower the inherent resistance value and it is not preferable since rolling resistance of a tire is increased. Herein, the inherent resistance value refers to a volume resistivity measured under the conditions of constant temperature and constant humidity where a temperature is 23° and a relative humidity is 55 %, setting an applied voltage of 1000 V and according to JIS K6271 with respect to other than thereof.

Among the tread part, the sidewall part, the breaker part or the ply part, all of the inherent resistance values of the tread part, the sidewall part, the breaker part and the ply part are at least $10^9$ $\Omega$·cm.

The tread part, the sidewall part, the breaker part and the ply part comprise a rubber component and a reinforcing filler.

As the rubber component in the tread part, the sidewall part, the breaker part or the ply part, examples are diene rubbers such as a natural rubber (NR), a styrene-butadiene rubber (SBR) and a polybutadiene rubber (BR), and butyl rubbers such as a butyl rubber and a chlorinated butyl rubber. The diene rubber is preferable as the rubber component because it is possible to carry out sulfur vulcanization and the existing tire production facility can be used. Among the diene rubbers, SBR is referable as the rubber component of the tread part, and a natural rubber is preferable as the rubber component of the sidewall part, the breaker part and the ply part.

As the reinforcing filler compounded in the tread part, the sidewall part, the breaker part or the ply part, examples are silica, carbon black, clay, talc, and calcium carbonate, but among these, silica and carbon black are preferably used in combination because abrasion resistance, wet grip performance and rolling resistance performance can be sufficiently improved.

In the tread part, the sidewall part, the breaker part or the ply part, an amount ratio of silica in the reinforcing filler is at least 70 % by weight, preferably at least 80 % by weight, and more preferably at least 90 % by weight. When the amount ratio of silica is less than 70 % by weight, it is difficult to have both reinforcing property of a rubber and the effect of lowering hysteresis loss and rolling resistance of a tire or durability is lowered.

The tread part, the sidewall part, the breaker part or the ply part can suitably contain additives such as wax, an antioxidant, stearic acid and zinc oxide, and vulcanizing agents such as a silane coupling agent and sulfur, a vulcanization accelerator and the like which are usually used in the tire industry, in addition to the rubber component and the reinforcing filler. Further, they are prepared by comprising a kneading step which is generally carried out in the tire industry.

The tire parts of the present invention include a bead part, a chafer portion and the like in addition to the tread part, the sidewall part, the breaker part and the ply part. Further, the bead part in the present invention comprises a bead apex 5, a bead core 6, a reinforcing filler 7 and a clinch 9 as shown in Fig. 1.

The inherent resistance value of the clinch is preferably at least $10^9$ $\Omega \cdot$cm. Further, the inherent resistance value refers to a volume resistivity which was measured under conditions of constant temperature and constant humidity where a temperature is 23°C and a relative humidity is 55 %, setting an applied voltage of 1000 V and according to JIS K6271 with respect to other than thereof, in the same manner as described above.

The clinch preferably comprises a rubber component and a reinforcing filler.

As the rubber component in the clinch, examples are diene rubbers such as a natural rubber (NR), a styrene-butadiene rubber (SBR) and a butadiene rubber (BR), and butyl rubbers such as a butyl rubber and a chlorinated butyl rubber, but a diene rubber is preferable as the rubber component because when the diene rubber is used, it is possible to carry out sulfur vulcanization and cost is low. Among the diene rubber, a natural rubber is preferable as the rubber component of the clinch.

As the reinforcing filler compounded in the clinch, examples are silica, carbon black, clay, talc, and calcium carbonate, but among these, silica and carbon black are preferably used in combination because electric conductivity and rolling resistance performance can be improved.

In the clinch, the amount ratio of silica in the reinforcing filler is at least 70 % by weight. When the amount ratio of silica is less than 70 % by weight, the hysteresis loss of a rubber of the clinch does not become small and the rolling resistance tends to be lowered.

The clinch can suitably contain additives such as wax, an antioxidant, stearic acid and zinc oxide, vulcanizing agents such as a silane coupling agent and sulfur, and a vulcanization accelerator, which are generally used in the tire industry, in addition to the rubber component and the reinforcing filler. Further, it is prepared by comprising a kneading step which is generally carried out in the tire industry.

The conductive rubber layer contained in the present invention is (a) an conductive rubber layer (hereinafter, referred to as the conductive rubber layer (a)) which contacts with a bead part, continuously arranged to the ground contact surface of the tread part through between the sidewall part and the ply part, or (b) an conductive rubber layer (hereinafter, referred to as the conductive rubber layer (b)) which contacts with a bead part, continuously arranged between the sidewall part and the ply part and between the tread part and the breaker part or in the tread part.

The conductive rubber layers (a) and (b) preferably contact with the bead apex among the bead part respectively, and in particular, they preferably contact with the bead apex and then contact with the rim. Since the conductive rubber layer (a) or (b) contacts with the rim, electricity is discharged little by little during running and an effect of suppressing the accumulation of electricity is obtained.

The conductive rubber layer (a) or (b) in the tire of the present invention is respectively arranged between the sidewall part and the ply part.

The conductive rubber layer (a) is arranged to the ground contact surface of the tread part. Thereby, the edge portion of the conductive rubber layer (a) is exposed to the tread surface, electricity is discharged little by little during running and an effect of suppressing accumulation of electricity is obtained.

A thickness of the conductive rubber layer (a) or (b) is respectively at least 0.1 mm and preferably at least 0.3 mm. When the thickness is less than 0.1 mm, the electric conductivity of the conductive rubber layer is not sufficient. Further, the thickness of the conductive rubber layer (a) or (b) is respectively at most 5 mm, preferably at most 2 mm, and further preferably at most 1.5 mm. When the thickness exceeds 5 mm, the thickness of the side portion of a tire containing the conductive rubber layer becomes large and the weight the a tire is increased; therefore, rolling resistance of the tire is increased.

The inherent resistance value of the conductive rubber layer (a) or (b) is respectively at most $10^8$ Ω·cm and preferably at most $10^7$ Ω·cm. Further, when the inherent resistance value exceeds $10^8$ Ω·cm, the resistance value of a tire is increased, static charge is accumulated in a vehicle and various problems are caused due to the discharge phenomenon of static charge. Herein, the inherent resistance value refers to a volume resistivity which was measured under conditions of constant temperature and constant humidity where a temperature is 23°C and a relative humidity is 55 %, setting an applied voltage of 1000 V and according to JIS K6271 with respect to other than thereof, in the same manner as described above.

The conductive rubber layer (a) or (b) comprises a rubber component and a reinforcing filler.

As the rubber component in the conductive rubber layer (a) or (b), examples are diene rubbers such as a natural rubber (NR), a styrene-butadiene rubber (SBR) and a butadiene rubber (BR), an butyl rubbers such as a butyl rubber and a chlorinated butyl rubber, but a diene rubber is preferable as the rubber component, SBR is more preferable and a solution polymerization styrene-butadiene rubber (S-SBR) is further preferable.

As the reinforcing filler in the conductive rubber layer (a) or (b), examples are silica, carbon black, clay, talc, and calcium carbonate, but among these, silica and/or carbon black is preferable as the reinforcing filler since processability of a rubber and the reinforcing property of a rubber can be compatible.

The amount of carbon black in the conductive rubber layer (a) or (b) is preferably at least 3 parts by weight based on 100 parts by weight of the rubber component in the conductive rubber layer (a) or (b), more preferably at least 6 parts by weight, and further preferably at least 7 parts by weight. When the amount is less than 3 parts by weight, electric conductivity of the conductive rubber layer tends to be insufficient. Further, the amount of carbon black in the conductive rubber layer is preferably at most 150 parts by weight based on 100 parts by weight of the rubber component in the conductive rubber layer (a) or (b), more preferably at most 100 parts by weight, and further preferably at most 50 parts by weight. When the amount exceeds 150 parts by weight, besides rolling resistance of a tire is increased, processability of the conductive rubber layer is lowered, the conductive rubber layer is hardened, difference in rigidity with other rubber layer is caused and durability of a tire tends to be lowered.

The nitrogen adsorbing-specific area ($N_2SA$) of carbon black in the conductive rubber layer (a) or (b) is preferably at least 40 $m^2/g$. Further, $N_2SA$ of carbon black in the conductive rubber layer is preferably at most 1500 $m^2/g$.

The dibutyl phthalate oil absorption amount (DBP oil absorption amount) of carbon black in the conductive rubber layer (a) or (b) is preferably at least 100 ml/100 g. Further, the DBP oil absorption amount of carbon black in the conductive rubber layer is at most 700 ml/100 g.

When $N_2SA$ is less than 40 $m^2/g$ or when the DBP oil absorption amount is less than 100 ml/100 g, a large amount of carbon black is required for surely obtaining electric conductivity of the conductive rubber layer in case of using carbon black and the processability at the production of tires tends to be lowered. Further, when $N_2SA$ exceeds 1500 $m^2/g$ or when the DBP oil absorption amount exceeds 700 ml/100 g, particles of carbon black are fine and carbon black developing its structure is used; thus, processability during the production of tires tends to be lowered.

Additives such as a wax, an antioxidant, stearic acid and zinc oxide, vulcanizing agents such as a silane coupling agent and sulfur, a vulcanization accelerator, which are usually used in the tire industry, can be suitably compounded in the conductive rubber layer (a) or (b), in addition to the rubber component and the reinforcing filler.

Further, the conductive rubber layer (a) or (b) is preferably prepared by comprising a step of kneading the rubber component, the reinforcing filler, the above-described additives and the silane coupling agent (referred to as a step (1)) and a step of adding a vulcanizing agent and a vulcanization accelerator to the kneaded article obtained in the fore-mentioned step and kneading thereof (referred to as a step (2)). It is preferable that a kneading temperature in the step (1) is 130 to 160°C and a kneading time is 2 to 5 minutes. Further, it is preferable that a kneading temperature in the step (2) is 130 to 160°C and a kneading time is 2 to 5 minutes.

In the tire of the present invention, when the conductive rubber layer (a) or (b) is arranged at the boundary surface of tire parts such as a tread part, a breaker part, a ply part and a sidewall part, the tire can be prepared by pasting the conductive rubber layer (a) or (b) with the above-mentioned parts by a step of pasting the above-mentioned tread part, breaker part, ply part, sidewall part etc which is generally carried out in the tire industry.

Further, when the conductive rubber layer (a) or (b) is arranged not only at the boundary surface of the above-mentioned parts but also, for example, in the tread part and the sidewall part, and when narrow strips are laminated to be used for the production of tires forming the respective parts of tires, the tires can be prepared by sandwiching the conductive rubber layer between the laminated rubber layers.

The tire of the present invention can be specifically made as a tire with a tube or a tire with air, but is preferably made as a tube with air.

EXAMPLES

The present invention is explained in detail based on Examples, but is not limited to thereto.

Various chemicals used in Examples are described below.

Natural rubber: TSR 20

S-SBR: NS116 available from ZEON Corporation.

Carbon black 1: N220 ($N_2SA$: 111 $m^2/g$ and DBP oil absorption amount: 115 ml/100 g) available from SHOWA CABOT K. K.

Carbon black 2: N330 ($N_2SA$: 79 $m^2/g$ and DBP oil absorption amount: 105 ml/100 g) available from Mitsubishi Chemical Corporation.

Carbon black 3: SEAST 9R ($N_2SA$: 140 $m^2/g$ and DBP oil absorption amount: 115 ml/100 g) available from Tokai Carbon Co., Ltd.

Carbon black 4: KETCHEN BLACK EC600KD ($N_2SA$: 1270 $m^2/g$ and DBP oil absorption amount: 495 ml/100 g) available from Ketchen Black International Co.

Carbon black 5: SHOWABLACK N550 ($N_2SA$: 42 $m^2/g$ and DBP oil absorption amount: 115 ml/100 g) available from SHOWA CABOT K. K.

Silica: SILICA 115GR available from ROHDIA Japan Ltd.

Oil: DIANA PROCESS OIL AH40 available from Idemitsu Kosan Co., Ltd.

Wax: SUNNOC N available from OUCHI SHINKO CHEMICAL INDUSTRIAL CO., LTD.

Antioxidant: ANTIGEN 6C available from Sumitomo Chemical Co., Ltd.

Stearic acid: STEARIC ACID "TSUBAKI" available from NOF Corporation.

Zinc oxide: ZINC OXIDE available from Mitsui Mining & Smelting Co., Ltd.

Silane coupling agent: Si69 available from DEGUSSA Japan Corporation.

Insoluble sulfur: MU-CRON OT20 available from Shikoku Chemicals Corporation.

Vulcanization accelerator 1: NOCCELER NS-P available from OUCHI SHINKO CHEMICAL INDUSTRIAL CO., LTD.

Vulcanization accelerator 2: SOXINOL D available from Sumitomo Chemical Co., Ltd.

Vulcanization accelerator 3: NOCCELER DZ-G available from OUCHI SHINKO CHEMICAL INDUSTRIAL CO., LTD.

(Preparation of F, L and M compounding conductive rubber layer)

After the above-described various chemicals other than sulfur and vulcanization accelerators according to Table 1 were kneaded at 150°C for 3 minutes with a 1.7 L Banbury mixer manufactured by Kobe Steel., Ltd., sulfur and vulcanization accelerators were further compounded and kneaded at 95°C for 3 minutes with an open roll and the mixture was extruded, thereby F, L and M compounding an unvulcanized tread part in the state of a sheet were prepared.

TABLE 1

| | conductive rubber layer composition | | |
| --- | --- | --- | --- |
| | F | L | M |
| Amounts (part by weight) | | | |
| S-SBR | 100 | 100 | 100 |
| Silica | - | 35 | - |
| Carbon black 3 | 40 | - | - |
| Carbon black 4 | - | 9 | - |
| Carbon black 5 | - | - | 100 |
| Wax | 2 | 2 | 2 |
| Antioxidant | 2 | 2 | 2 |
| Stearic acid | 2 | 2 | 2 |
| Zinc flower | 3 | 3 | 3 |
| Silane coupling agent | - | 4 | - |
| Insoluble sulfur | 2 | 2 | 2 |
| Vulcanization accelerator 1 | 1 | 1 | 1 |
| Inherent resistance value of conductive rubber layer ($\Omega \cdot cm$) | At most $10^7$ | At most $10^7$ | At most $10^7$ |

(Preparation of A and G compounding tread part)

After the above-described various chemicals other than sulfur and vulcanization accelerators according to Table 2 were kneaded at 150°C for 3 minutes with a 1.7 L Banbury mixer manufactured by Kobe Steel., Ltd., sulfur and vulcanization accelerators were further compounded and kneaded at 95°C for 3 minutes with an open roll, and the mixture was extruded, thereby A and G compounding an unvulcanized tread part in the state of a sheet were prepared.

(Preparation of B and H compounding breaker part)

After the above-described various chemicals other than sulfur and vulcanization accelerators according to Table 2 were kneaded at 150°C for 3 minutes with a 1.7 L Banbury mixer manufactured by Kobe Steel Ltd., sulfur and vulcanization accelerators were further compounded and kneaded at 95°C for 3 minutes with an open roll, and the mixture was extruded, thereby B and H compounding an unvulcanized breaker part in the state of a sheet were prepared.

(Preparation of C and I compounding ply part)

After the above-described various chemicals other than sulfur and vulcanization accelerators according to Table 2 were kneaded at 150°C for 3 minutes with a 1.7 L Banbury mixer manufactured by Kobe Steel Ltd., sulfur and vulcanization accelerators were further compounded and kneaded at 95°C for 3 minutes with an open roll, and the mixture was extruded, thereby C and I compounding an unvulcanized ply part in the state of a sheet were prepared.

TABLE 2

| | Tread part composition | | Breaker part | | Ply part composition | |
|---|---|---|---|---|---|---|
| | A | G | B | H | C | I |
| Amounts (part by weight) | | | | | | |
| S-SBR | 100 | 100 | - | - | - | - |
| Natural rubber | - | - | 100 | 100 | 100 | 100 |
| Polybutadiene | - | - | - | - | - | - |
| Silica | 60 | - | 50 | - | 40 | - |
| Carbon black 1 | 5 | 65 | 5 | - | 5 | - |
| Carbon black 2 | - | - | - | 55 | - | 45 |
| Oil | 10 | 10 | 2 | 2 | 2 | 2 |
| Wax | 2 | 2 | - | - | - | - |
| Antioxidant | 2 | 2 | 2 | 2 | 2 | 2 |
| Cobalt salt | - | - | 1.5 | 1.5 | - | - |
| Stearic acid | 2 | 2 | 1 | 1 | 2 | 2 |
| Zinc flower | 3 | 3 | 10 | 10 | 6 | 6 |
| Silane coupling agent | 6 | - | 5 | - | 2.4 | - |
| Insoluble sulfur | 2.2 | 2.2 | 6.9 | 6.9 | 3.75 | 3.75 |
| Vulcanization accelerator 1 | 1 | 1 | - | 1 | 1.5 | 1.5 |
| Vulcanization accelerator 2 | 0.5 | - | - | - | 0.5 | - |
| Vulcanization accelerator 3 | - | - | 1 | - | - | - |
| Inherent resistance value of tire parts ($\Omega$.cm) | $2.5 \times 10^{14}$ | At most $10^7$ | $8.0 \times 10^{14}$ | At most $10^7$ | $7.0 \times 10^{14}$ | At most $10^7$ |

(Preparation of D and J compounding sidewall part)

After the above-described various chemicals other than sulfur and vulcanization accelerators according to Table 3 were kneaded at 150°C for 3 minutes with a 1.7 L Banbury mixer manufactured by Kobe Steel Ltd., sulfur and vulcanization accelerators were further compounded and kneaded at 95°C for 3 minutes with an open roll, and the mixture was extruded, thereby D and J compounding an unvulcanized sidewall part in the state of a sheet were prepared.

(Preparation of E and K compounding clinch part)

After the above-described various chemicals other than sulfur and vulcanization accelerators according to Table 3 were kneaded at 150°C for 3 minutes with a 1.7 L Banbury mixer manufactured by Kobe Steel Ltd., sulfur and vulcanization accelerators were further compounded and kneaded at 95°C for 3 minutes with an open roll, and the mixture was extruded, thereby E and K compounding an unvulcanized clinch part in the state of a sheet were prepared.

TABLE 3

| | Sidewall part composition | | Clinch composition | |
|---|---|---|---|---|
| | D | J | E | K |
| Amounts (part by weight) | | | | |
| S-SBR | - | - | - | - |
| Natural rubber | 60 | 60 | 60 | 60 |
| Polybutadiene | 40 | 40 | 40 | 40 |
| Silica | 45 | - | 65 | - |
| Carbon black 1 | 5 | - | 5 | 70 |
| Carbon black 2 | - | 50 | - | - |
| Oil | - | - | - | - |
| Wax | 2 | 2 | 2 | 2 |
| Antioxidant | 2.5 | 2.5 | 2.5 | 2.5 |
| Cobalt salt | - | - | - | - |
| Stearic acid | 2 | 2 | 2 | 2 |
| Zinc flower | 4 | 4 | 4 | 4 |
| Silane coupling agent | 4.5 | - | 6.5 | - |
| Insoluble sulfur | 2 | 2 | 3 | 3 |
| Vulcanization accelerator 1 | 1 | 1 | 3 | 3 |
| Vulcanization accelerator 2 | 0.5 | - | 0.5 | - |
| Vulcanization accelerator 3 | - | - | - | - |
| Inherent resistance value of tire parts ($\Omega \cdot cm$) | $2.5 \times 10^{14}$ | At most $10^7$ | $5.0 \times 10^{14}$ | At most $10^7$ |

EXAMPLES 1 to 5 and COMPARATIVE EXAMPLES 1 to 4

(Preparation of tires in Examples 1 to 5 and Comparative Examples 1 to 4)

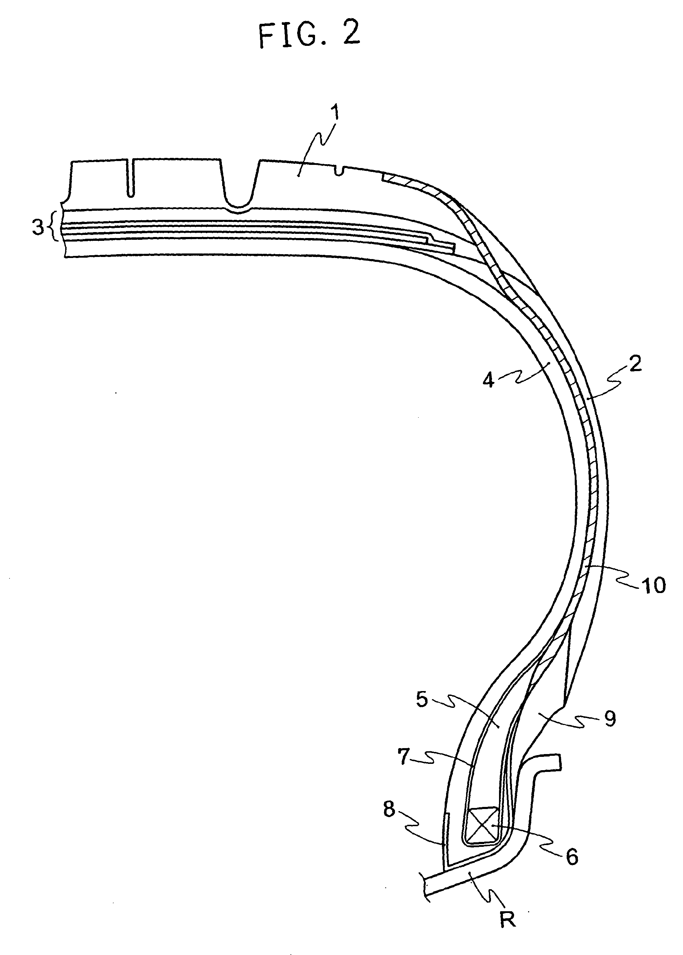

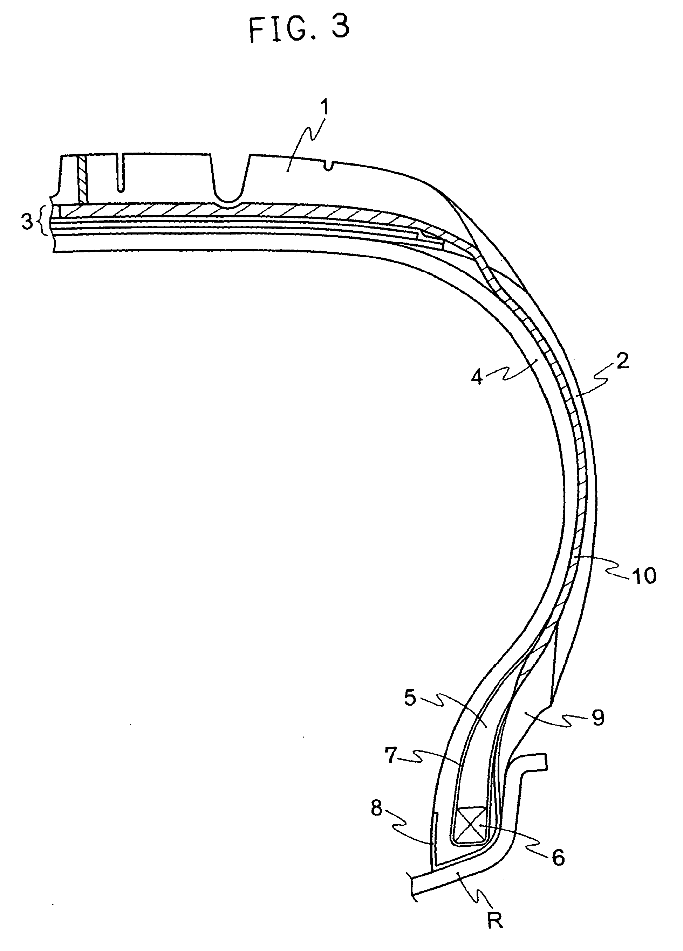

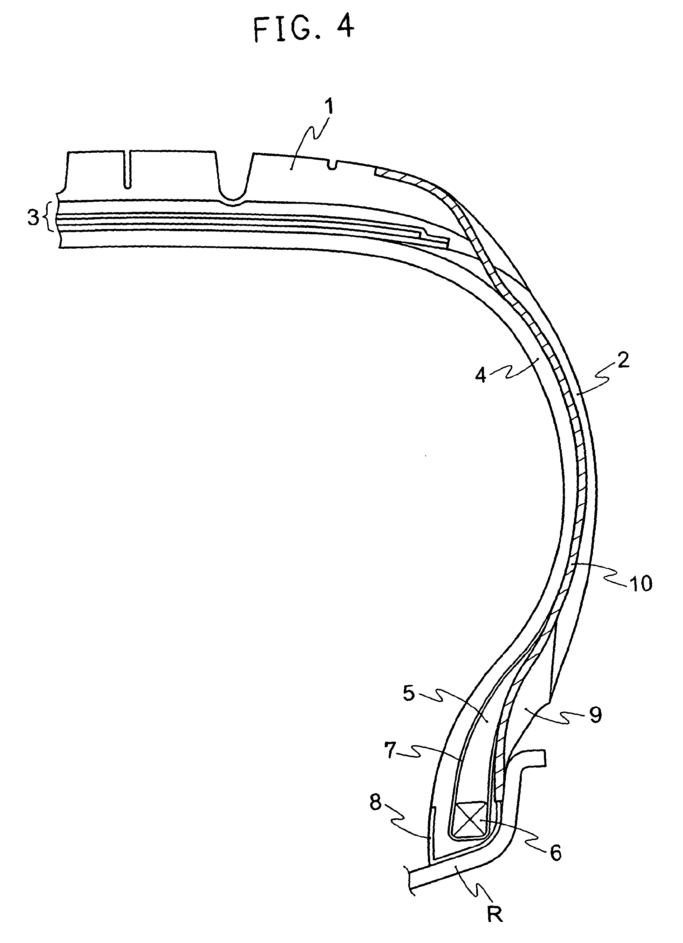

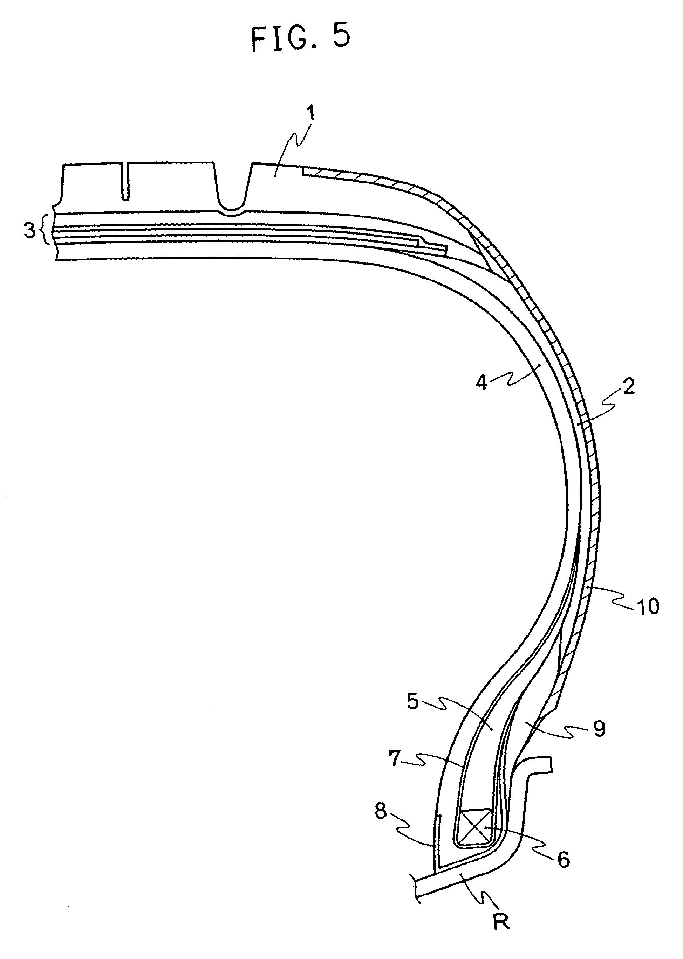

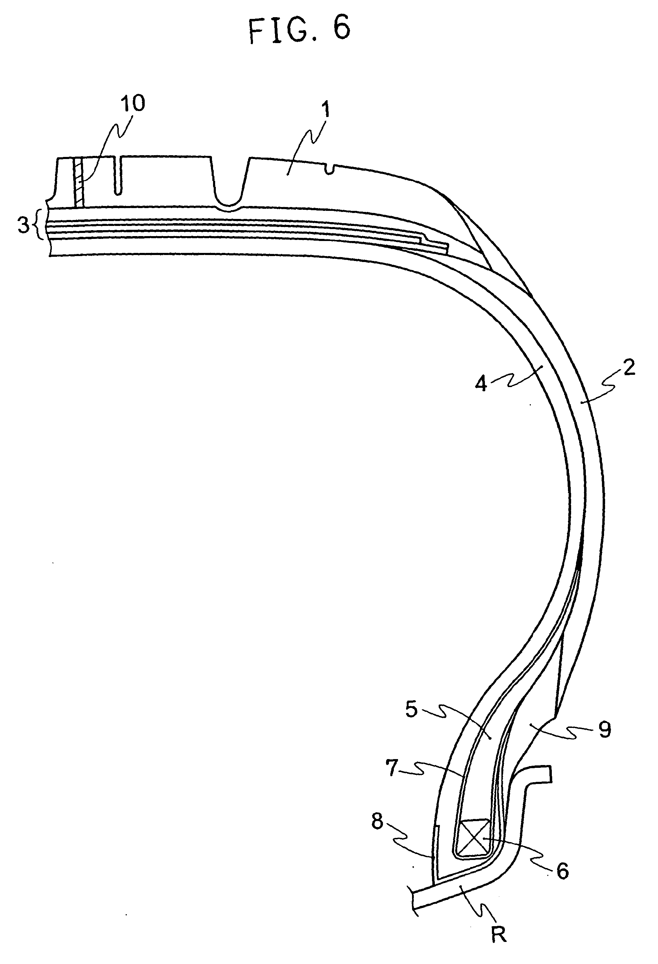

Tire parts and conductive rubber layers described in Table 4 and other tire parts were kneaded according to a conventional process with an enclosed mixer, respective parts were prepared by an extrusion calendar step to prepare unvulcanized tires and they were vulcanized under the conditions of a pressure of 18 kgf, a temperature of 150°C and a vulcanization time of 30 minutes to prepare the tire of Example 1 (shown in Fig. 2), the tire of Example 2 (shown in Fig. 3), the tires of Examples 3 to 5 (shown in Fig. 4), the tire of Comparative Example 1 (shown in Fig. 5), the tires of Comparative Examples 2 to 3 (shown in Fig. 1) and the tire of Comparative Example 4 (shown in Fig. 6) (tire size: 195/65R15).

All of the thicknesses of conductive rubbers in Examples 1 to 5 and Comparative Examples 1 and 4 were 0.7 mm and Comparative Examples 2 and 3 have no conductive rubber layer.

Measurement tests shown in the following were carried out using the obtained tires.

<Rolling resistance performance>

Rolling resistance was respectively measured by running each of tire under the conditions of a load of 4.7 kN, a tire inner pressure of 2.0 MPa and a speed of 80 km/h, using a rolling resistance tester manufactured by STI. The measurement values of the rolling resistance were respectively shown by an index (rolling resistance index) by the following formula, referring the measurement value of Comparative Example 3 to 100 (basis). It is indicated that as the rolling resistance index is large, the rolling resistance of a tire is lowered and the rolling resistance performance is excellent. The results were shown in Table 4.

(Rolling resistance index) = (Rolling resistance in Comparative Example 3) / (Rolling resistance in each composition) × 100

<Inherent resistance value of tire after running>

A tire is run for 30,000 km on a drum under the conditions of an inner pressure of 2.0 MPa, a load of 5.5 kN and a speed of 80 km/h, then, a tread part is placed on an iron plate under the conditions of an inner pressure of 2.0 MPa and a load of 4.7 kN, the inherent resistance value (volume resistivity) between the rim part and the iron plate was measured at an applied voltage of 100 V. The results are shown in Table 4.

TABLE 4

| | Ex. | | | | | Com. Ex. | | | |
|---|---|---|---|---|---|---|---|---|---|
| | 1 | 2 | 3 | 4 | 5 | 1 | 2 | 3 | 4 |
| Tread part composition | A | A | A | A | A | A | A | G | A |
| Breaker part composition | B | B | B | B | B | B | B | H | H |
| Ply part composition | C | C | C | C | C | C | C | I | I |
| Sidewall part composition | D | D | D | D | D | D | D | J | J |
| Clinch composition | K | K | E | E | E | K | K | K | K |
| Conductive rubber layer composition | F | F | F | L | M | F | None | None | F |
| Index of rolling resistance | 116 | 115 | 116 | 119 | 114 | 115 | 115 | 100 | 109 |
| Inherent resistance value of tire ($\Omega \cdot cm$) | $2.00 \times 10^7$ | $4.00 \times 10^7$ | $3.00 \times 10^7$ | $3.00 \times 10^7$ | $9.00 \times 10^7$ | $>1.00 \times 10^9$ | $>1.00 \times 10^9$ | $1.00 \times 10^6$ | $8.00 \times 10^7$ |

<Inherent resistance values of conductive rubber layer and tire parts>

The inherent resistance value (volume resistance) was measured under the conditions of constant temperature and constant humidity where a temperature is 23° and a relative humidity is 55 %, setting an applied voltage of 1000 V and according to JIS K 6271 with respect to other than thereof, by using a digital ultra high resistance minute electric current tester (R-8340A) manufactured by ADVANTEST CORPORATION. The measurement results are shown in Tables 1 to 3.

According to the present invention, since the tread part, sidewall part, breaker part or ply part shows a specific inherent resistance value, comprises a specific amount of silica, and has a particular conductive rubber layer, the tire improving electric conductivity and rolling resistance performance can be provided.

**Claims**

1. A tire, wherein the inherent resistance value of a tread part (1) is at least $10^9$ $\Omega$·cm and an amount ratio of silica in a reinforcing filler is at least 70 % by weight in the tread part (1), a sidewall part (2), the breaker part (3) or the ply part (4), further having a conductive rubber layer (10) together with the tire parts, wherein the conductive rubber layer (10) contacts with a bead part (5-9) and has an inherent resistance value of at most $10^8$ $\Omega$·cm and a thickness of 0.1 to 5 mm, **characterized in that** the inherent resistance value of a breaker part (3) and a ply part (4) is at least $10^9$ $\Omega$·cm, and the inherent resistance value of the sidewall part (2) is at least $10^9$ $\Omega$·cm and the conductive rubber layer (10) is continuously arranged to the ground contact surface of the tread part (1) through between the sidewall part (2) and the ply part (4).

2. A tire, wherein the inherent resistance value of a tread part (1) is at least $10^9$ $\Omega$·cm and an amount ratio of silica in a reinforcing filler is at least 70 % by weight in the tread part (1), a sidewall part (2), the breaker part (3) or the ply part (4), further having a conductive rubber layer (10) together with the tire parts, wherein the conductive rubber layer (10) contacts with a bead part (5-9) and has an inherent resistance value of at most $10^8$ $\Omega$·cm and a thickness of 0.1 to 5 mm, **characterized in that** the inherent resistance value of a breaker part (3) and a ply part (4) is at least $10^9$ $\Omega$·cm, and the inherent resistance value of the sidewall part (2) is at least $10^9$ $\Omega$·cm and the conductive rubber layer (10) is continuously arranged between the sidewall part (2) and the ply part (4) and between the tread part (1) and the breaker part (4) or in the tread part (1).

3. A tire of Claim 1 or 2, wherein the conductive rubber layer (10) further comprises carbon black having a nitrogen adsorbing-specific area of 40 to 1500 $m^2$/g and an amount of dibutyl phthalate oil absorption of 100 to 700 ml/ 100g.

**Patentansprüche**

1. Reifen, wobei der inhärente Widerstandswert eines Laufflächenteils (1) zumindest $10^9$ $\Omega$·cm beträgt, und ein Mengenverhältnis von Silica in einem Verstärkungsfüllstoff zumindest 70 Gewichts-% in den Laufflächenteil (1), einem Seitenwandteil (2), dem Breakerteil (3) oder dem Lagenteil (4) beträgt, und der darüber hinaus eine leitende Kautschukschicht (10) zusammen mit den Reifenteilen aufweist, wobei die leitende Kautschukschicht (10) mit einem Wulstteil (5-9) in Kontakt steht und einen inhärenten Widerstandswert von höchstens $10^8$ $\Omega$·cm und eine Dicke von 0,1 bis 5 mm aufweist, **dadurch gekennzeichnet, dass** der inhärente Widerstandswert eines Breakerteils (3) und eines Lagenteils (4) zumindest $10^9$ $\Omega$·cm beträgt, und der inhärente Widerstandswert des Seitenwandteils (2) zumindest $10^9$ $\Omega$·cm beträgt, und die leitende Kautschukschicht (10) kontinuierlich bis zu der Aufstandsfläche des Laufflächenteils (1) hindurch zwischen dem Seitenwandteil (2) und dem Lagenteil (4) angeordnet ist.

2. Reifen, wobei der inhärente Widerstandswert eines Laufflächenteils (1) zumindest $10^9$ $\Omega$·cm beträgt, und ein Mengenverhältnis von Silika in einem Verstärkungsfüllstoff zumindest 70 Gewichts-% in dem Laufflächenteil (1), einem Seitenwandteil (2), dem Breakerteil (3) oder dem Lagenteil (4) beträgt, der darüber hinaus eine leitende Kautschukschicht (10) zusammen mit den Reifenteilen aufweist, wobei die leitende Kautschukschicht (10) mit einem Wulstteil (5-9) in Kontakt steht und einen inhärenten Widerstandswert von höchstens $10^8$ $\Omega$·cm und eine Dicke von 0,1 bis 5 mm aufweist,

**dadurch gekennzeichnet, dass** der inhärente Widerstandswert eines Breakerteils (3) und eines Lagenteils (4) zumindest $10^9$ Ω·cm beträgt, und

der inhärente Widerstandswert des Seitenwandteils (2) zumindest $10^9$ Ω·cm beträgt, und die leitende Kautschukschicht (10) kontinuierlich zwischen dem Seitenwandteil (2) und dem Lagenteil (4) und zwischen dem Laufflächenteil (1) und dem Breakerteil (4) oder in dem Laufflächenteil (1) angeordnet ist.

**3.** Reifen nach Anspruch 1 oder 2,
wobei die leitende Kautschukschicht (10) ferner Ruß mit einer durch Stickstoffadsorption bestimmten spezifischen Oberfläche von 40 bis 1500 m²/g und einer Absorptionsmenge von Dibutylphthalatöl von 100 bis 700 ml/100 g umfasst.

**Revendications**

**1.** Pneu, dans lequel la valeur de résistance inhérente d'une partie de bande de roulement (1) est d'au moins $10^9$ Ω·cm et un rapport de quantité de silice dans une charge de renforcement est d'au moins 70 % en masse dans la partie de bande de roulement (1), une partie de flanc (2), la partie de ceinture (3) ou la partie de nappe (4), présentant de plus une couche de caoutchouc conductrice (10) avec les parties de pneu, dans lequel la couche de caoutchouc conductrice (10) est en contact avec une partie de cordon (5-9) et présente une valeur de résistance inhérente d'au plus $10^8$ Ω·cm et une épaisseur de 0,1 à 5 mm,
**caractérisé en ce que** la valeur de résistance inhérente d'une partie de ceinture (3) et d'une partie de nappe (4) est d'au moins $10^9$ Ω·cm, et la valeur de résistance inhérente de la partie de flanc (2) est d'au moins $10^9$ Ω·cm et la couche de caoutchouc conductrice (10) est disposée en continu sur la surface en contact avec le sol de la partie de bande de roulement (1) d'un bout à l'autre entre la partie de flanc (2) et la partie de nappe (4).

**2.** Pneu, dans lequel la valeur de résistance inhérente d'une partie de bande de roulement (1) est d'au moins $10^9$ Ω·cm et un rapport de quantité de silice dans une charge de renforcement est d'au moins 70 % en masse dans la partie de bande de roulement (1), une partie de flanc (2), la partie de ceinture (3) ou la partie de nappe (4), présentant de plus une couche de caoutchouc conductrice (10) avec les parties de pneu, dans lequel la couche de caoutchouc conductrice (10) est en contact avec une partie de cordon (5-9) et présente une valeur de résistance inhérente d'au plus $10^8$ Ω·cm et une épaisseur de 0,1 à 5 mm,
**caractérisé en ce que** la valeur de résistance inhérente d'une partie de ceinture (3) et d'une partie de nappe (4) est d'au moins $10^9$ Ω·cm, et la valeur de résistance inhérente de la partie de flanc (2) est d'au moins $10^9$ Ω·cm et la couche de caoutchouc conductrice (10) est disposée en continu entre la partie de flanc (2) et la partie de nappe (4) et entre la partie de bande de roulement (1) et la partie de ceinture (4) ou dans la partie de bande de roulement (1).

**3.** Pneu selon la revendication 1 ou 2, dans lequel la couche de caoutchouc conductrice (10) comprend de plus du noir de carbone présentant une surface spécifique d'adsorption d'azote de 40 à 1 500 m²/g et une quantité d'absorption d'huile de phtalate de dibutyle de 100 à 700 ml/100 g.

# FIG. 1

# FIG. 2

# FIG. 3

# FIG. 4

# FIG. 5

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8230407 A
- JP 3101557 B
- JP 2003064222 A
- JP 2000225618 A
- JP 11254924 A
- DE 820543 C
- JP 2004268863 A
- EP 1533144 A